# EUROPEAN PATENT SPECIFICATION

(11) **EP 2 761 552 B1**
(45) Date of publication and mention of the grant of the patent: **13.05.2020**
(21) Application number: 12834672.3
(22) Date of filing: 26.09.2012
(51) Int. Cl.: G06Q 20/36, H04L 9/32

(54) **SECURELY RELOADABLE ELECTRONIC WALLET**
SICHERE WIEDERAUFLADBARE ELEKTRONISCHE GELDBÖRSE
PORTE-MONNAIE ÉLECTRONIQUE RECHARGEABLE DE FAÇON SÛRE

(30) Priority: 27.09.2011 US 201113246701
(43) Date of publication of application: 06.08.2014
(73) Proprietor: Amazon Technologies, Inc., Reno, NV 89507 (US)
(72) Inventor: KAMOTSKYY, Oleksandr, Seattle, WA 98109-5210 (US); KENNEDY, Iain, A., Seattle, WA 98109-5210 (US)
(74) Representative: Blake, Stephen James
(86) International application number: PCT/US2012/057321
(87) International publication number: WO 2013/049192

(56) References cited:
- US-A- 5 221 838
- US-A- 5 590 197
- US-A1- 2002 165 831
- US-A1- 2003 004 869
- US-A1- 2007 255 653
- US-A1- 2009 063 312
- US-A1- 2009 307 135
- US-A1- 2010 317 318
- US-E1- R E39 736

## Description

### BACKGROUND

People often store money (e.g., cash, bank cards, etc.) and other personal information (e.g., driver license, insurance cards, etc.) in a wallet or purse. People also often carry mobile telephones, which are capable of storing various digitized information available for retrieval upon request. Some of the items that are traditionally stored in a wallet or purse may be digitized, stored, and managed by a mobile telephone. For example, the mobile telephone may act as an electronic wallet by storing payment information that, upon request by a user, may be provided to other parties to fulfill a payment request. However, like wallets or purses, mobile telephones are subject to loss or theft, which may expose the user's electronic wallet to misuse, particularly when the electronic wallet contains large sums of money.

To prevent misuse of an electronic wallet, payment systems often employ security such as password protection, biometrics, encryption, or other types of security. For example, a user may have to enter a username and password before transmitting a payment request from the electronic wallet. In other example, the user may have to undergo a biometric identification process before transmitting the payment request. These security measures may cause delay in processing a payment and may be embarrassing for a user to use in some instances, such as during a checkout process in a busy retail store. Further, the security measures may be compromised, which may allow misuse of payment accounts available from the electronic wallet.

US 2010/317318 A1 discloses methods and apparatus for providing pre-paid payment capability on mobile telephones.

US 5 590 197 A discloses an electronic payment system and method.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.
FIG. 1 is a schematic diagram of an illustrative computing environment to provide a securely reloadable electronic wallet.
FIG. 2 is a block diagram of illustrative servers to host a payment account and provide limited access, via a mobile electronic device, to funds in the payment account.
FIG. 3 is a block diagram of an illustrative mobile electronic device to receive credentials associated with a portion of funds in the payment account and to transmit credentials to a payee to make a payment with the portion of the funds.
FIG. 4 is a flow diagram of an illustrative process to load electronic money and/or credentials on the mobile electronic device and then manage the electronic money and/or credentials stored on the mobile electronic device.
FIG. 5 is a flow diagram of an illustrative process to transmit credentials to the electronic mobile device and transfer funds between payment accounts upon verification of a valid request to transfer funds.
FIG. 6 is a flow diagram of an illustrative process to load an electronic wallet with electronic money.
FIG. 7 is a flow diagram of an illustrative process to make a payment using the electronic money available from the electronic mobile device.
FIG. 8 is a flow diagram of an illustrative process to facilitate payments using shared electronic money and/or a shared account.
FIG. 9 is an illustrative user interface (UI) of the mobile electronic device showing a payment application that presents an invoice from a recipient.

### DETAILED DESCRIPTION

### Overview

This disclosure is directed to, in part, techniques and systems to provide a securely reloadable electronic wallet. In accordance with various embodiments, a host may maintain a payment account for a user. The user may instruct the host, via a secure channel, to transmit payment information to the user's mobile electronic device (e.g., mobile telephone, smart phone, electronic fob, etc.). The payment information may include credentials, authentication key(s), a signature, an amount (allocation), and/or other types of payment information. The payment information may be limited to a predetermined amount or allocation of electronic money that, when exhausted or expired, prevents further payments using the mobile electronic device. The user may reload the mobile electronic device by reconnecting to the host via the secure channel. In some embodiments, the user may set up reoccurring allocations of payment information from the host. For example, the host may provide $100 to the mobile electronic device each week. In case of loss or theft of the mobile electronic device, the user may cancel future allocations of payment information, thereby minimizing potential loss of money by the user.

In some embodiments, the user may make a payment using the mobile electronic device by authorizing a payment request using at least a portion of the payment information. For example, the mobile electronic device may receive an invoice from a seller, merchant, or recipient. The user may view the invoice and then authorize a payment using a payment request. The mobile electronic device may then transmit the payment request, which may be encrypted and include an authentication key, a signature, a device identifier (ID), and/or other data to the seller. The seller may then attach additional data to the payment request, such as a seller authentication key, a signature, seller ID, and/or other data. The seller may then transmit the payment request to the host. The host may decrypt the request and verify a validity and/or authenticity of the payment request. If the payment request is valid (e.g., the keys and/or signature are correct) and the necessary funds are available (e.g., not exceeding current allocation), then the host may transfer funds from the user to the seller and update a remaining balance for the allocation for the mobile electronic device.

By providing allocations to the mobile electronic device, the user is not exposed to possible theft and misuse of all funds available in the user's account because the mobile electronic device only has access to the allocated funds, which may be limited to a portion of all the funds available in the user's account. The mobile electronic device may simplify a payment process due to this limited risk of loss. For example, the mobile electronic device may not require passwords, biometrics, or other security inputs from the user prior to making a payment once the payment is received and stored by the mobile electronic device.

The techniques and systems described herein may be implemented in a number of ways. Example implementations are provided below with reference to the following figures.

### Illustrative Environment

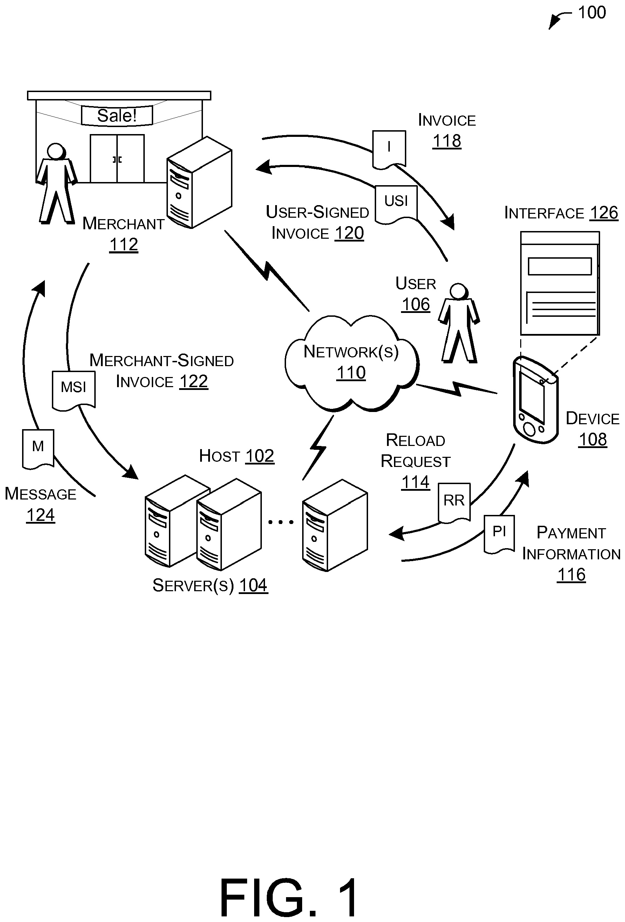

FIG. 1 is a schematic diagram of an illustrative computing environment 100 to provide a securely reloadable electronic wallet. The environment 100 includes a host 102 that includes servers 104 that manage payment accounts and facilitate transactions using the payment accounts. A user 106 may communicate with the host 102 to manage the payment account, such as add funds to the payment account, withdraw funds, make payments, make deposits, or otherwise interact with the payment account.

In some embodiments, the user 106 may use a mobile electronic device ("device") 108 to communicate with the servers 104 via one or more network(s) 110. The device 108 may be a mobile telephone, a smart phone, a tablet computer, a laptop computer, a netbook, a personal digital assistance (PDA), a gaming device, a media player, an electronic fob, or any other electronic device that includes connectivity to the network(s) 110. The network(s) 110 may include wired and/or wireless networks that enable communications between the various entities in the environment 100. In some embodiments, the network(s) 110 may include local area networks (LANs), wide area networks (WAN), mobile telephone networks (MTNs), and other types of networks, possibly used in conjunction with one another, to facilitate communication between the servers 104, the device 108, and a merchant 112.

In accordance with one or more embodiments, the user 106 may transmit a reload request 114 to the servers 104 to request the host 102 to provide payment information 116 to the device 108. The payment information 116 may be associated with an allocation of a portion of funds available in a payment account associated with the user 104. The payment information 116 may be electronic money and include credentials, authentication key(s), a signature, an amount (allocation), and/or other types of payment information. The authentication key(s) may include public/private keys to enable encryption/decryption of the payment information. The servers 104 may transmit the payment information 116 to the device 108. For example, the servers 104 may transmit electronic money worth $100 to the device 108 along with an authorization key or signature for use with the associated electronic money. The authorization key or signature may be renewed for each allocation, and thus correspond to a particular allocation of electronic money. Thus, once the allocation of funds is exhausted (spent) or expires, then the authorization key(s) and/or signature may be terminated or expire. After receipt by the device 108, the user 106 may make payments of the electronic money to merchants, such as the merchant 112, to pay for goods and/or services. The user may also make payments to other parties using the electronic money, such as friends, family, or other people or entities. For simplicity, this description uses the term "merchant 112" as synonymous with a "payee," "recipient," "seller," or a "payment recipient" while the user 106 is synonymous with a "payer" or a "payment provider." However, the user 106 may also receive funds as a payee in accordance with the techniques described herein.

The electronic money may be associated with at least a portion of actual funds stored in the payment accounts, and thus, when spent, allow a payee to collect funds from the user's payment account via the host 102. Thus, the electronic money may operate similar to commercial paper such as a personal check, except it is transferred in electronic form and is associated with an allocated distribution of funds which may be less than an amount of money in the user's payment account. The electronic funds may also be encrypted and associated with a particular device identifier (ID) or other identification information.

The user 106 may transmit electronic money to an entity, such as the merchant 112. In some instances, the merchant 112 may have a brick and mortar location that enables the user 106 to visit the merchant at a particular location. However, the merchant 112 may also, or alternatively, have an electronic marketplace that is accessible to the user 106 via the network(s) 110. For example, the electronic marketplace may be a website that enables the user 106 to purchase goods and/or services or a catalog-based service that allows the user to browse items sold, rented, leased, or otherwise made available from the merchant 112.

During a payment transaction between the merchant 112 and the user 106, the merchant may transmit an invoice 118 to the device 108. The device 108 may receive the invoice 118 via near field communication (NFC) or other communication paths (e.g., the Internet, Wi-Fi, mobile telephone network, etc.). The device 108 may process the invoice 118 with a payment application that manages the electronic money. The invoice 118 may include an amount due to the merchant 118 (or other entity), an identifier of the merchant 118, and/or other applicable payment information.

The user 106 may inspect the invoice 118, and then respond accordingly. For example, the user 106 may decide to reject the request, accept the request as is, or accept the request with a modification. After the user 106 accepts the invoice 118, the device 108 may transmit a user-signed invoice 120 to the merchant 112. The user-signed invoice 120 may include an amount of the electronic money, an identifier of the device 108 and/or the user 106, an authentication key, a signature, and/or other payment information. The user-signed invoice 120 may be encrypted by the device 108 and not readable by the merchant 112.

After receipt of the user-signed invoice 120, the merchant 112 may add additional information to create a merchant-signed invoice 122. The additional information may include a merchant ID, a merchant authentication key, a signature, and/or other information. The merchant-signed invoice 122 may be encrypted by the merchant 112. The merchant 112 may then transmit the merchant-signed invoice 122 the servers 104 of the host 102 to request payment from the host from funds in the user's payment account. In some embodiments, the device 108 may transmit the user-signed invoice 120 directly to the host 102. In this situation, the user-signed invoice 120 may include an identifier of the merchant 112, and may take the place of the merchant-signed invoice 122. Thus, in some instances, the merchant 112 may not need to send data to the host 102.

Upon receipt of the merchant-signed invoice 122, the host may verify perform any necessary decryption, and then authenticity of the merchant-signed invoice 122 and availability of the electronic money. For example, the host 102 may determine whether the user's payment account has enough funds designated for the allocation of electronic money to the device 108 to satisfy the payment request (via the merchant-signed invoice 122). If the host 102 determines that the merchant-signed invoice 122 is authentic (e.g., proper decryption, proper keys/signature, etc.) and the funds are available, the servers 104 may transmit a message 124 to the merchant 112. The message 124 may confirm the payment amount and occurrence of the actual payment to the merchant. The payment to the merchant may be performed by a transfer of funds between payment accounts of the user 106 and the merchant 112, or may include a payment to the merchant via other processes (electronic transfer, etc.). However, when the user's payment account does not have enough funds because the allocation has been exhausted, expired, or a balance of the allocation is less than an amount indicated in the merchant-signed invoice 122, then the payment request (i.e., the merchant-signed invoice 122) may be rejected or declined via the message 124. In some embodiments, the servers 104 may transmit a message to the device 106 to inform the user that the payment has been completed or denied.

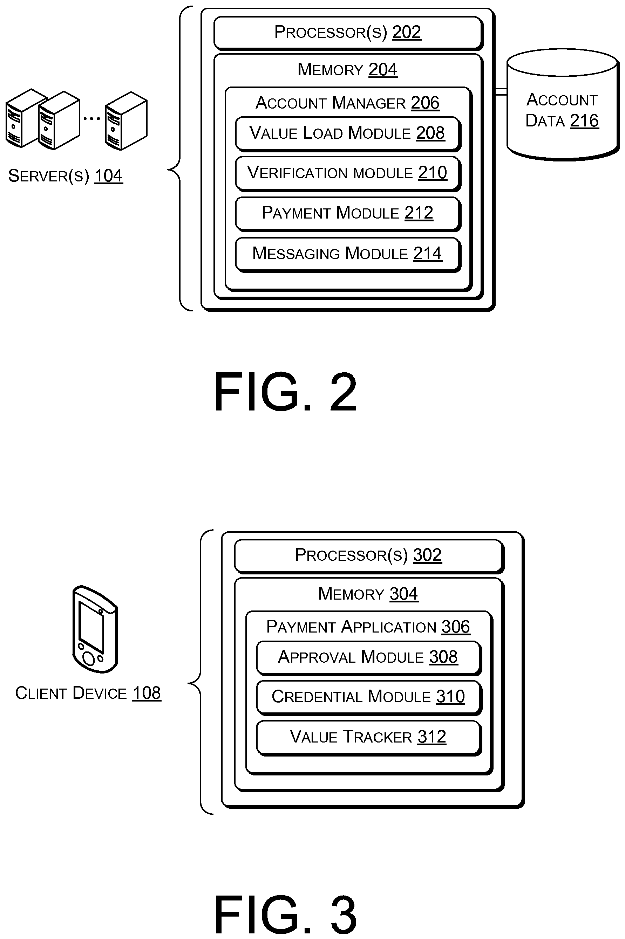

The user 106 may interact with a user interface (UI) 126 presented by the device 108 to manage the payment application that allows the user to approve an invoice or otherwise spend electronic money. The UI 126 may also allow the user to receive electronic money and generate invoices, similar to the invoice 118 generated by the merchant 112. In some embodiments, the UI may allow the user 106 to reload an allocation of electronic money onto the device 108 via the secure channel. However, the reloading (via the reload request 114) may require use of passwords, biometrics, and/or other security measures. For example the reloading may be restricted to known internet protocol (IP) addresses or other known communication attributes. In some embodiments, the reloading may be restricted to use by another device (e.g., home computer, automated teller machine (ATM), etc.) other than the device 108, thereby preventing the user (or another person) from reloading the device 108 with electronic funds without access to the other device. The payment application is discussed in greater detail with reference to FIG. 3.

### Illustrative Computing Devices

FIG. 2 is a block diagram of the illustrative servers 104 that host a payment account and provide limited access, via the device 108, to funds in the payment account. The servers 104 may include processors(s) 202 and memory 204. The memory 204 may store various modules, applications, programs, or other data. The memory 204 may include instructions that, when executed by the processor(s) 202, cause the processors to perform the operations described herein for the host 102. In some embodiments, the memory 204 may store an account manager 206. The account manager 206 may include a number of modules that perform some or all of the various operations described herein. In accordance with various embodiments, the account manager 206 may include some or all of the following modules: a value load module 208, a verification module 210, a payment module 212, and a messaging module 214. In addition, the servers 104 may include data storage for payment accounts 216. The payment accounts 216 may include payment information, electronic money distributions, and other payment data for the user 106. The merchant 112 may also have one or more of the payment account 216 stored by the servers 104. Each module is discussed in turn.

In accordance with one or more embodiments, the value load module 208 may receive and process the reload request 114 from the user 106 via the device 108 using a secure channel. The load request may be a request by the user 106 to have the host 102 allocation electronic money to the device 108. The value load module 208 may analyze the request to verify whether the payment account has adequate funds to process the request and whether the reload request complies with any other restrictions or rules associated with a user's payment account. When the amount is available and no conflicts are detected, the value load module 208 may transmit the payment information 116 to the device 108. In some embodiments, the user 106 may establish reoccurring allocations using the value load module 208. For example, the user 106 may desire to have a specified amount transmitted or loaded on the device 108 on particular days (e.g., daily, weekly, monthly, or at other intervals). If the user 106 were to lose the device 108, the user may cancel the allocation via the value load module 208 to discontinue, at least temporarily, the transmission of the payment information to the device 106 and thereby limit possible loss of money through misuse of the device 108. In some embodiments, subsequent allocations may be limited to replenishing a set amount. Thus, if a balance of electronic funds exists on the device 108 at the time of a next allocation, the allocation may only replenish spent funds rather than allocating the previous amount, for example. In some embodiments, the allocation may be set to expire after a predetermined length of time. For example, an allocation may expire just prior to a next allocation.

The verification module 210 may decrypt and analyze the merchant-signed invoice 122 to determine whether the merchant-signed invoice 122 is authentic. For example, the verification module 120 may inspect the authentication keys and/or signature provided in the merchant-signed invoice 122. The authentication keys and/or signature may include keys from the merchant, the device 106, or both. The verification module 210 may also determine whether the requested amount is available in the payment account and not already spent, exhausted, or expired. In addition, the verification module 210 may perform a fraud analysis on a request to determine whether the merchant-signed invoice 122 is fraudulent or is a result of fraudulent activity (e.g., stolen device used at a suspicious location, etc.).

The payment module 212 may perform a payment according to the merchant-signed invoice 122 when the payment is approved by the verification module 210. In some embodiments, the payment module 212 may transfer funds from the user's payment account to a payment account associated with the merchant 112. In various embodiments, the payment module 212 may provide an electronic funds transfer to the merchant's financial institution to transmit the payment to the merchant 112.

The messaging module 214 may transmit messages to the device 108 and/or the merchant 112. In some embodiments, the messaging module 214 may transmit information that indicates that a payment was approved or declined. The message module 124 may also confirm an amount of a payment since the merchant 112 may be unable to view the amount from the user-signed invoice 120 due to encryption by the device 108. The messaging module 214 may transmit a balance of the electronic money to the device 106 on a periodic basis, a random basis, and/or after a triggering event. For example, when a balance of electronic money is available for use by multiple parties having different devices (i.e., a shared allocation), then the messaging module 214 may transmit messages to each use after usage of some of the allocated funds.

FIG. 3 is a block diagram of the device 108 that may receive payment information associated with a portion of funds in the payment account and to transmit a payment request (e.g., the user-signed invoice 120) to a payee (e.g., the merchant 112) to make payments with electronic money associated with the portion of the funds. The device 108 may include processors(s) 302 and memory 304. The memory 304 may store various modules, applications, programs, or other data. The memory 304 may include instructions that, when executed by the processor(s) 302, cause the processors to perform the operations described herein for the device 108. In some embodiments, the memory 304 may store a payment application 306. The payment application 306 may include a number of modules that perform some or all of the various operations described herein. In accordance with various embodiments, the payment manager 306 may include some or all of the following modules: an approval module 308, a credential module 310, and a value tracker 312. Each module is discussed in turn.

In various embodiments, the approval module 308 may enable the user to perform a payment to the merchant 112 or other payee. The approval module 308 may receive the invoice 118 and present information from the invoice to the user 106. The approval module 308 may then allow the user 106, via the device 108, to accept an amount due and thus make a payment with the electronic money. In some embodiments, the approval module 308 may enable the user 106 to modify a payment amount, enter a payment amount, view a balance of the allocation of the electronic money, or a combination thereof. In various embodiments, the approval module 308 may initiate a payment without first receiving an invoice (e.g., the invoice 118).

The credential module 310 may store and transmit authorization key(s), a signature, a device ID, and/or other information along with a payment (i.e., the user-signed invoice 120). For example, the payment information 116 may be stored, at least in part, by the credential module 310. The credential module 310 may then encrypt a payment with the authorization key(s) and/or signature and also may include a device ID to create the user-signed invoice 120.

The value tracker 312 may track an available amount of electronic money available on the electronic device for a given allocation. In some embodiments, the value tracker may also track a balance of a shared account, such as when multiple users share an allocation of electronic money using respective devices.

### Illustrative Operation

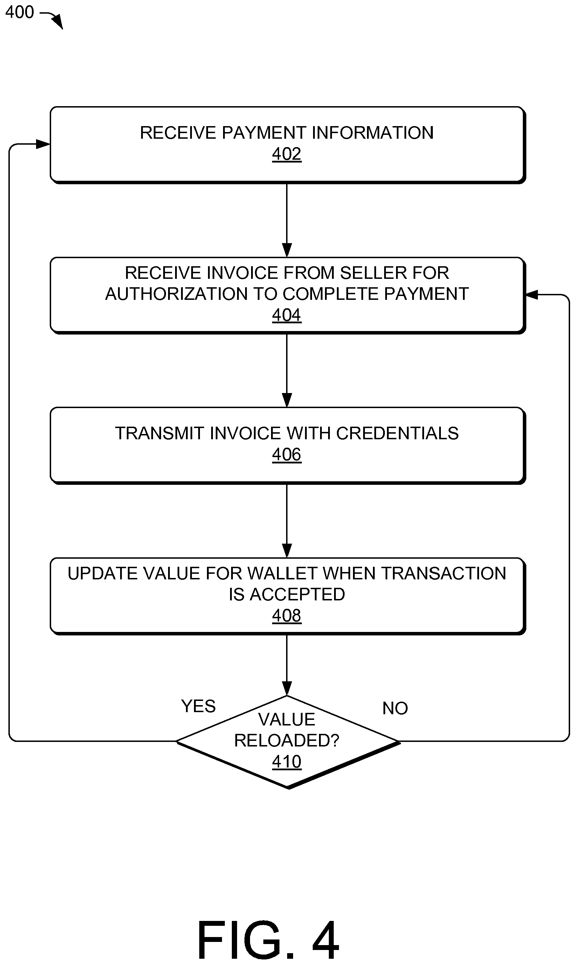

FIG. 4 is a flow diagram of an illustrative process 400 to load funds and/or credentials on the device 108 and then manage the funds and/or credentials stored on the device. The process 400 is illustrated as a collection of blocks in a logical flow graph, which represent a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the process. Other processes described throughout this disclosure, in addition to process 400, shall be interpreted accordingly.

The process 400 is described with reference to the environment 100 and may be performed by the device 108. Of course, the process 400 may be performed in other similar and/or different environments.

At 402, the payment application 306 of the device 108 may receive the payment information from the value load module 208 executed by the servers 104. For example, the credential module 310 may receive authentication key(s) and/or a signature associated with an allocation of a payment amount. The value tracker 312 may receive a value of the allocation of electronic money. In some embodiments, the payment application may decrypt the payment information to access the electronic money.

At 404, after the user 106 has initiated a transaction, the approval module 308 may receive the invoice 118 from the merchant 112 or other entity that requests a payment. The approval module 308 may determine an amount requested (i.e., payment amount), an identity of the requesting party (e.g., the merchant 112, etc.), and/or other applicable information (e.g., a time of the request, a description of a transaction, etc.).

At 406, the payment application 306 may transmit the user-signed invoice 120 to the merchant 112 or to the host 102 in response to receiving the invoice at the operation 404. For example, the approval module 308 may approve the invoice. In some embodiments, the credential module 210 may then transmit authentication key(s), a signature, and/or other information (e.g., a device ID, etc.) along with an amount due of electronic money to the merchant 112, who may ultimately transmit the data to the host 102. In various embodiments, the credential module 210 may transmit the authentication key(s), a signature, merchant ID and/or other information (e.g., a device ID, etc.) along with an amount due of electronic money to the host 102. Later, the host 102 may communicate with the merchant to complete the payment or reject the payment. The user-signed invoice 120 may be encrypted by the credential module 210. The electronic money may be an amount designation or an actual currency tracked electronically. Thus, the electronic money may be representative of actual funds in the user's payment account or may be the actual funds, and thus not be representative of actual funds in the user's payment account.

At 408, the value tracker 312 may update an available amount of electronic funds in an allocation when the transaction is processed. However, if the transaction is denied for any number of reasons, as discussed above, then the value tracker 312 may not update the available amount.

At 410, the payment application may determine whether to receive a reloading of electronic money via the operation 402. When the electronic money is reloaded, the process 400 may continue at the operation 402 (following the "yes" route from the operation 410). When the electronic money is not reloaded and another payment is processed (following the "no" route from the operation 410), the process 400 may continue at the operation 404. As discussed above, the reload process may be initiated by a request from the user, by a passage of time, or by other triggers.

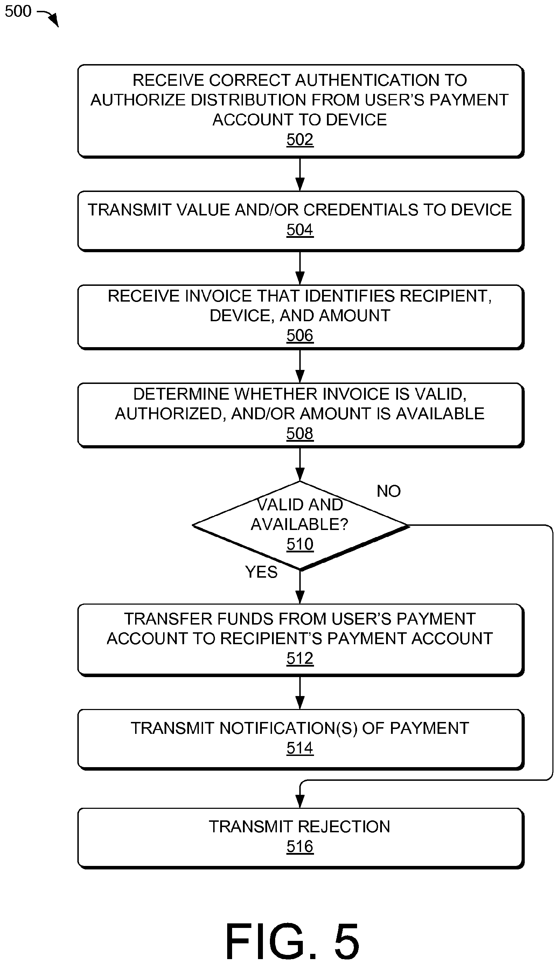

FIG. 5 is a flow diagram of an illustrative process 500 to transmit the credentials to the device 108 and transfer funds between payment accounts upon verification of a valid request to transfer funds. The process 500 is described with reference to the environment 100 and may be performed by the server(s) 104. Of course, the process 500 may be performed in other similar and/or different environments. Again, the order in which the operations are described is not intended to be construed as a limitation, and any number of the described blocks can be combined in any order and/or in parallel to implement the process.

At 502, the value load module 208 on the servers 104 may receive correct authentication information from the user 106. The value load module 208 may then authorize a distribution of electronic money from funds of the user's payment account for use by the device 108.

At 504, the value load module 208 may transmit value and/or credentials to the device 108. In some embodiments, the value load module 208 may designate funds in the payment account for use by the device 108 via the payment application 306. To use the funds, the payment module 212 may transmit credentials to a payee (e.g., the merchant 112), which then redeems the credentials for a payment of funds from the host 102 via the user's payment account. The funds in the payment account may be specifically reserved for exclusive use by the device 108 or verified prior to the operation 504, which may limit spending via the device 108 as discussed below. In various embodiments, the value load module 208 may transmit funds from the user's account as electronic money to the device 108. The user's payment account may be debited the amount of the funds, which may then be transmitted electronically to other entitles, such as the merchant 112.

For example, the servers 104 may generate a unique identifier (ID) for an allocation of the electronic money. The servers 104 may also create a pair of private and public keys along with the electronic money. The device 108 may receive the public key used for the allocation and the electronic money, which can be read using the public key that the device 108 received from the servers 104.

At 506, after the user 106 performs a transaction with the merchant 112, the verification module 210 of the servers 104 may receive the merchant-signed invoice 122 from the merchant 112 or directly from the device 108. The merchant-signed invoice 122 may include an identification of the merchant (or payee), the user and/or device 108, and a payment amount.

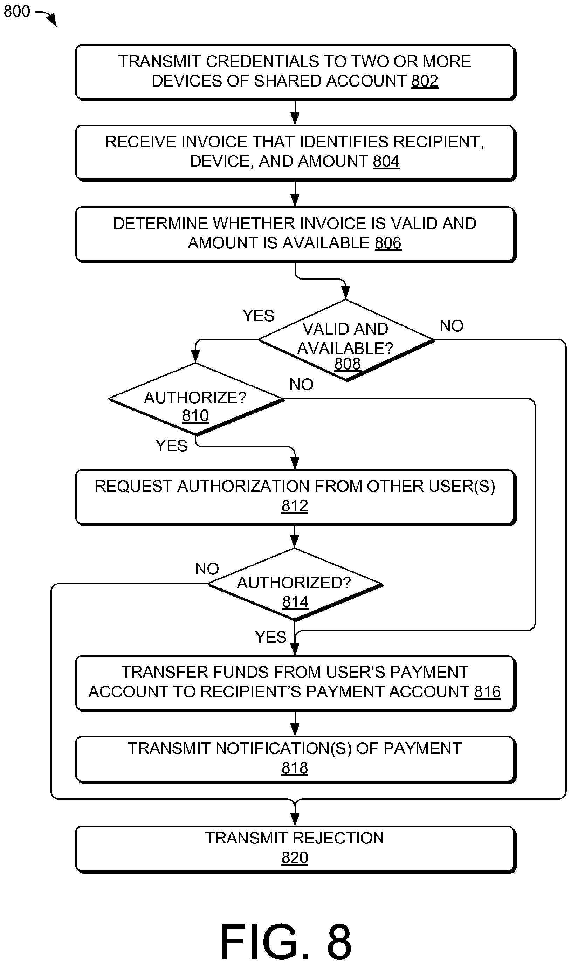

At 508, the verification module 210 may determine whether the merchant-signed invoice is valid, authorized, and/or the amount is available in the user's payment account. The merchant-signed invoice may be valid if the credentials, authorization key(s), signature, or other security measures are valid. In addition, the verification module 210 may perform fraud analysis on the merchant-signed invoice to determine whether the payment is subject to fraud. For example, the user 106 may have reported a loss of the device 108, which may stop payments from the device 108. In some embodiments, the payment may be subject to approval by another user, such as when the payment is from a shared payment account (as described below in with reference to FIG. 8 or when the payment includes an authorizing user (e.g., a parent, etc.). The payment amount may be available from the payment account when the funds are reserved for exclusive use by the device 108. However, when funds are not specifically reserved, then the verification module 210 may have to determine whether the user's payment account has adequate funds to satisfy the payment indicated in the merchant-signed invoice 122.

At 510, the verification module 210 determines whether the merchant-signed invoice 122 is valid and the funds are available as determined in the operation 508. When the merchant-signed invoice 122 is valid and the funds are available (via the "yes" route), then the process 500 may proceed to the operation 512.

At 512, the payment module 212 may transfer funds from the user's payment account to the payment account of the merchant. In some instances, the transfer of funds may include transferring an electronic payment to the merchant 112 via a financial institution of the merchant.

At 514, the messaging module 214 may transmit a notification of the payment to the merchant 112 and possibly to the device 108. In some embodiments, the notification may also be transmitted to other devices that share the electronic money with the device 108. For example, a group of people may share electronic money that is spendable via respective devices. When a member of the group makes a payment of electronic money, then the notification may notify the other members of the payment and update an available balance shown to the members of the group.

When the merchant-signed invoice 122 is not valid and/or the funds are not available in the user's payment account (via the "no" route from the decision operation 510), then the payment module 212 may transmit a message to the merchant 112 and/or the device 108 that indicates a rejection at 516, and possibly a reason for the rejection (e.g., insufficient funds, etc.).

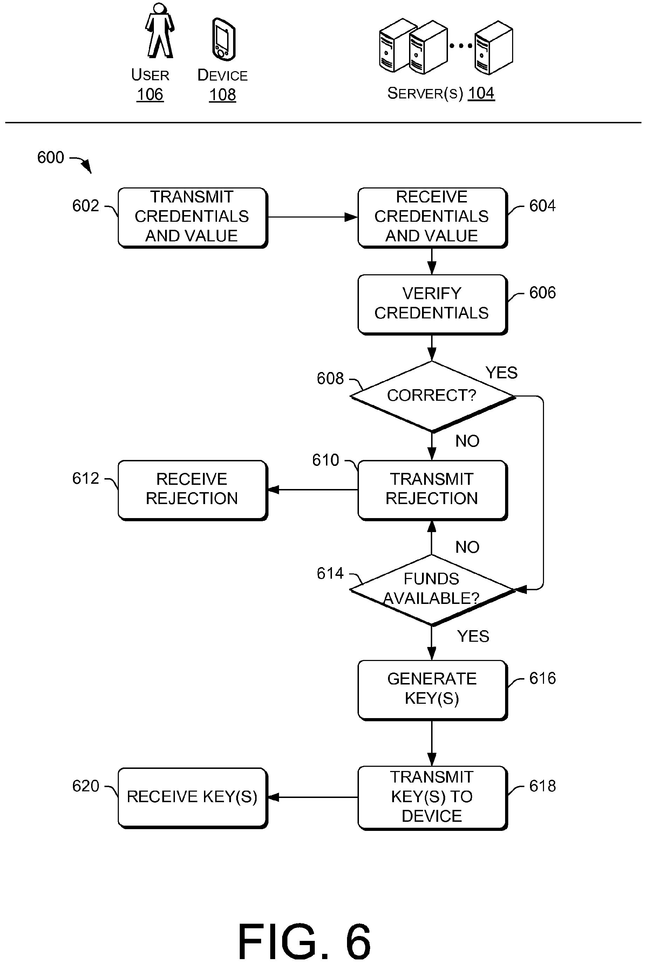

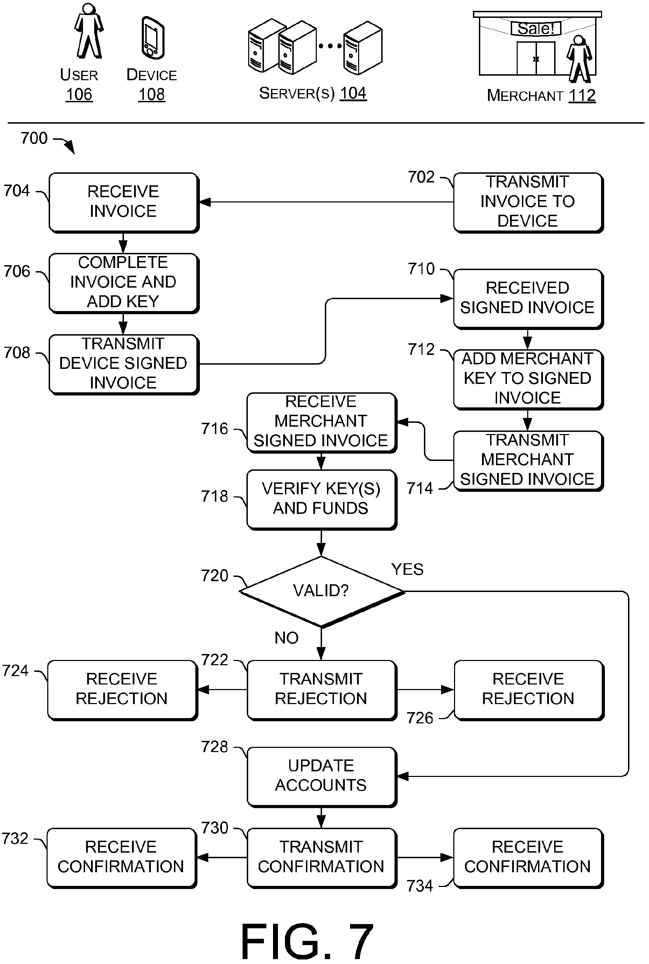

FIGS. 6 and 7 show processes to load an electronic wallet with electronic money and to make a payment using the electronic money available via the device. The collection of blocks is organized under respective entities that may perform the various operations described in the blocks. However, other entities may perform some of the operations in these processes. In addition, the order in which the operations are described is not intended to be construed as a limitation, and any number of the described blocks can be combined in any order and/or in parallel to implement the processes.

FIG. 6 is a flow diagram of an illustrative process 600 to load the payment application 306 with electronic money.

At 602, the user 106 may transmit, using the device 108 or another computing device, credentials and a requested value to the servers 104. For example, the user 106 may transmit a username, password, biometrics, and/or other security credentials to access the user's payment account. The user 106 may then select an amount of electronic money to load onto the device 108. In some embodiments, the user may also select other attributes of the electronic money, such as an expiration time/date, an automatic reloading at a later time, and so forth.

At 604, the value load module 208 may receive the credentials and the requested value. The verification module 210 may verify the credentials at 606. The verification module 210 may also perform other security analysis. For example, the verification module 210 may determine whether an IP address used for the request from the operation 602 is from a known IP address associated with the user 106. In some embodiments, the verification module 210 may also use authentication credentials (e.g., white/black list, etc.) and/or authorization credentials (e.g., permissions/authorizations from other users, etc.) to determine whether the request is valid and/or approved.

At 608, the verification module 210 may determine whether the credentials are correct. When the credentials are not correct (following the "no" route from the decision operation 608), then messaging module 214 may transmit a rejection to the user at 610, which may be received by the user via the device 108 or the computing device at 612.

At 614, when the credentials are correct (following the "yes" route from the decision operation 608), then the verification module 210 may determine whether the requested amount is available in the user's payment account. In some embodiments, the amount may pertain to a credit limit of an associated account. When the requested amount is not available (following the "no" route from the decision operation 614), then operations 610 and 612 may take place as described above.

At 616, when the requested amount is available (following the "yes" route from the decision operation 614), the value load module 208 may generate authorization key(s) and/or a signature associated with the requested amount. In some embodiments, the authorization key(s) or signature may be electronic money. However, the authorization key(s) or signature may be credentials that, when correctly included in the merchant-signed invoice, authorize distribution of funds from the user's payment account to a payment account of the merchant 112 or other payee.

At 618, the value load module 208 may transmit the authorization key(s) and/or the signature to the device 108, which may be received by the device 108 at 620. For example, the user 106 may use a personal computer to perform the request at the operation 602 while the receipt of the authorization key(s) at the operation 620 may be received by the device 108, such as via the network(s) 110.

FIG. 7 is a flow diagram of an illustrative process 700 to make a payment using the electronic money available via the device 108.

At 702, the merchant 112 may transmit the invoice 118 to the device 108. The invoice 118 may include an amount due, transaction information, a reference number, a description of the merchant, a description of the goods/services involved in a transaction, and/or other information. At 704, the device 108 may receive the invoice 118.

At 706, the user 106 may complete the invoice by accepting a requested payment or designating another amount for payment using the approval module 308 via the device 108. The device 108 may add the authorization key(s), the signature, device information, user information, and/or other data to the invoice to create the user-signed invoice 120. In some embodiments, the authorization key(s) may be used to encrypt the user-signed invoice 120. At 708, the device 108 may transmit the user-signed invoice 120 to the merchant using the network(s) 110, via radio frequency identification (RFID), near field communication (NFC), or other short range communication techniques. The device 108 may also transmit the user-signed invoice 120 via other types of networks, such as the Internet, such as when completing a purchase from the merchant via a remote location. In some embodiments, the device 108 may also transmit a message to the host that identifies the portion of the electronic money transmitted to the merchant. This may verify an authenticity of the payment of the portion of the electronic money to the merchant and/or act as a receipt of a transaction between the user 106 and the merchant 112. The merchant 112 may receive the user-signed invoice 120 at 710.

At 712, the merchant 112 may add merchant information, additional authorization key(s), another signature, and/or other data to the user-signed invoice 120 to create the merchant-signed invoice 122. In various embodiments, the additional authorization key(s) may be used to encrypt the merchant-signed invoice 122. In some instances, the merchant 112 may be unable to verify the amount approved by the device 108 at the operation 706 due to encryption. However, the merchant may be notified by the host 102 of the transaction amount as described below. At 714, the merchant may transmit the merchant-signed invoice 122 to the servers 104 of the host 102, which may be received by the servers at 716.

In some embodiments, the operation 708 may transmit the invoice directly to the servers 104 and may thus facilitate the operations of 710-714. The invoice may include a merchant identifier. However, this may require the device 108 to be in communication with the servers 104 at the time of the transaction, which may not always be possible (e.g., mobile phone outside of mobile coverage, etc.).

At 718, the verification module 210 may verify the authorization key(s) (and/or the signature) and funds, as discussed in the operations 508 and 510. In accordance with some embodiments, the verification module 210 may decrypt the merchant-signed invoice 122 to determine information of the merchant 112 and information from the device 108 (or user 106). At 720, the verification module 210 may determine whether the request is valid and the funds are available. When the request is invalid and/or the funds are unavailable (following the "no" route), then the messaging module 214 may transmit a rejection, which may be received by the device 108 at 724 and by the merchant at 726.

When the request is valid and the funds are available (following the "yes" route from the decision operation 720), then the payment module 212 may complete a payment to the merchant 112 and/or update account information to reflect the payment at 728. At 730, the messaging module 214 may transmit a confirmation of the payment to the device 108 at 732 and to the merchant at 734. The confirmation at the operation 732 may update a balance of the allocation of electronic money available on the device 108. The updated balance may be equal to the allocation minus the payment and any applicable processing fees.

### Illustrative Shared Accounts

FIG. 8 is a flow diagram of an illustrative process 800 to facilitate payments using shared currency and/or a shared account. The process 800 is described with reference to the environment 100 and may be performed by the server(s) 104. Of course, the process 800 may be performed in other similar and/or different environments. Again, the order in which the operations are described is not intended to be construed as a limitation, and any number of the described blocks can be combined in any order and/or in parallel to implement the process.

At 802, the value load module 208 may transmit credentials (e.g., electronic money, etc.) to two or more devices that share an account and/or share the electronic money.

At 804, after one of the devices is used to make a payment, then the verification module 210 may receive an invoice that identifies at least the recipient (e.g., the merchant, seller, payee, etc.), the device, and the amount.

At 806, the verification module 210 may determine whether the invoice is valid and the amount is available. At 808, when the invoice is valid and available (following the "yes" route), then the account manager 206 may determine whether the payment is to be authorized by one or more of the other users (e.g., users of the other devices, etc.) at 810. When the authorization is required at 810 (following the "yes" route), then the messaging module 214 may transmit a request for authorization to the user(s) at 812. The request may be a real-time request which may delay the payment. In some instances, the payment may be placed on hold while the authorization request is performed. In various embodiments, the authorization request may be performed in advance of a payment to gain a pre-approval before the actual payment request is performed.

At 814, the process may determine whether the payment is authorized. When the payment is authorized (following the "yes" route from the decision operation 814) or when no authorization is required (following the "no" route from the decision operation 810), then the payment module 212 may transfer fund from the payment account to the recipient's account at 816. At 818, the messaging module 214 may transmit a notification of the payment, which may update a balance of available funds for the two or more devices that received the credentials at the operation 802.

However, when the transaction is not authorized (following the "no" route from the decision operation 814) or when the invoice is not valid or the funds are not available (following the "no" route from the decision operation 808), then the messaging module 214 may transmit a rejection to the users and/or the recipient at 820.

### Illustrative Operation

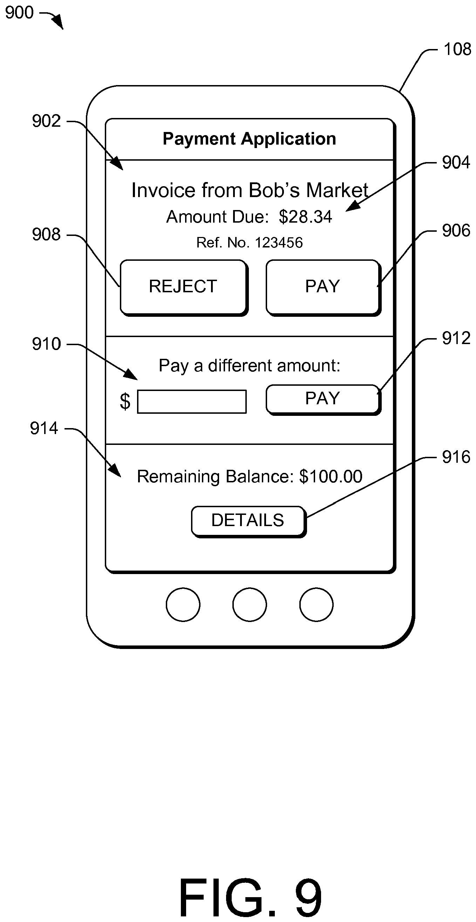

FIG. 9 is an illustrative user interface (UI) 900 of the device 108 showing the payment application 306 that presents an invoice from the merchant 112 or other payee or recipient.

The UI 900 may include merchant information 902 from the invoice 118. The merchant information may include a description of the merchant 112, a reference number, items involved in a transaction, and/or other data. The merchant information 902 may also include an amount due 904, which may be paid using the electronic money via the device 108. The user 106 may pay the amount due using a pay command 906 or reject the amount due using a reject command 908.

The UI 900 may also allow the user 106 to pay a different amount 910. The user may enter the different amount and then select a payment command 912.

In some embodiments, the UI 900 may include account details 914 to indicate a remaining balance of the electronic money and/or other information related to the distribution of electronic money and so forth. The account details 914 may enable the user to gain more information using a details command 916.

In some embodiments, the UI 900 may initiate a communication to a payee without the invoice. Thus, the UI 900 may enable the user 106 to create the user-signed invoice without the invoice 118 from the merchant 112.

### Conclusion

Although the subject matter has been described in language specific to structural features and/or methodological acts, it is to be understood that the subject matter defined in the appended claims is not necessarily limited to the specific features or acts described. Rather, the specific features and acts are disclosed as illustrative forms of implementing the claims.

## Claims

1. A server (104) comprising:
one or more processors (202); and
one or more computer-readable media storing (204) computer-executable instructions that, when executed, cause the one or more processors to perform acts comprising:
in response to receiving a request, from a device (108), to transmit an allocation of funds from a payment account to the device (108) as electronic money, generating at least an authorization key associated with the allocation, and transmitting the electronic money to the device with payment information that includes the at least an authorization key associated with the allocation, the allocation of funds being a predetermined amount that is less than the amount of available funds in the payment account; and
in response to receiving a request from a payee (112) for a payment of electronic money originating from the device, transmitting a payment to the payee,
wherein the request for a payment originates from the device and is encrypted by at least the authorization key and the payment is transmitted after decryption of the request and verification that a balance of the allocation of the funds is not exhausted by previous payments from the device and the payment does not exceed a balance of the allocation of funds.

2. The server (104) as recited in claim 1, wherein the request for the payment of electronic money is encrypted by the device using the authorization key.

3. The server (104) as recited in claim 1, wherein the one or more computer- readable media (204) further stores computer-executable instructions that, when executed, cause the one or more processors (202) to perform acts comprising:
transmitting a message to the device to update a balance of the allocation of the funds; and
transmitting a message to the payee (112) that indicates the payment is authorized and confirms an amount of the payment.

4. The server (104) as recited in claim 1, wherein the one or more computer- readable media (204) further stores computer-executable instructions that, when executed, cause the one or more processors (202) to perform acts comprising:
transmitting the electronic money to a second device; and
requesting an authorization for the request from a user different than a user that initiated the payment,
wherein the transmitting the payment to the payee (112) is contingent on the authorization from the user different than the user that initiated the payment.

5. A method performed by a server (104) comprising the steps of:
receiving a request, from a device (108), to transmit an allocation of funds from a payment account to the device (108) as electronic money;
generate at least an authorization key associated with the allocation
transmitting the electronic money to the device with payment information that includes the at least an authorization key associated with the allocation, the allocation of funds being a predetermined amount that is less than the amount of available funds in the payment account;
receiving a request from a payee (112) for a payment of the electronic money originating from the device; and
transmitting a payment to the payee,
wherein the request for a payment originates from the device and is encrypted by at least the authorization key and the payment is transmitted after decryption of the request and verification that a balance of the allocation of the funds is not exhausted by previous payments from the device and the payment does not exceed a balance of the allocation of funds.

6. The method as recited in claim 5, wherein the request for the payment of electronic money is encrypted by the device (108) using the authorization key.

7. The method as recited in claim 5, further comprising:
transmitting a message to the device (108) to update a balance of the allocation of the funds; and
transmitting a message to the payee (112) that indicates the payment is authorized and confirms an amount of the payment.

8. The method as recited in claim 5, further comprising:
transmitting the electronic money to a second device; and
requesting an authorization for the request from a user different than a user that initiated the payment,
wherein the transmitting the payment to the payee (112) is contingent on the authorization from the user different than the user that initiated the payment.

## Patentansprüche

1. Server (104), umfassend:
einen oder mehrere Prozessoren (202); und
ein oder mehrere computerlesbare Medien, die computerausführbare Anweisungen speichern (204), die, wenn sie ausgeführt werden, den einen oder die mehreren Prozessoren veranlassen, Handlungen durchzuführen, die Folgendes umfassen:
als Antwort auf das Empfangen einer Anforderung von einer Vorrichtung (108), eine Zuweisung von Geldmitteln von einem Zahlungskonto an die Vorrichtung (108) als elektronisches Geld zu übertragen, erfolgendes Erzeugen von mindestens einem mit der Zuweisung assoziierten Autorisierungsschlüssel und Übertragen des elektronischen Geldes zu der Vorrichtung mit Zahlungsinformation, die den mindestens einen mit der Zuweisung assoziierten Autorisierungsschlüssel einschließt, wobei die Zuweisung von Geldmitteln einen vorbestimmten Betrag aufweist, der kleiner als der Betrag der verfügbaren Geldmittel auf dem Zahlungskonto ist; und
als Reaktion auf das Empfangen einer Anforderung von einem Zahlungsempfänger (112) für eine Zahlung von elektronischem Geld, die von der Vorrichtung stammt, erfolgendes Übertragen einer Zahlung zum Zahlungsempfänger,
worin die Anforderung einer Zahlung von der Vorrichtung stammt und mindestens mit dem Autorisierungsschlüssel verschlüsselt ist, und die Zahlung nach Entschlüsselung der Anforderung und Überprüfung, dass ein Saldo der Zuweisung der Geldmittel nicht durch vorherige Zahlungen von der Vorrichtung erschöpft ist und die Zahlung einen Saldo der Zuweisung von Geldmitteln nicht übersteigt, übertragen wird.

2. Server (104) nach Anspruch 1, worin die Anforderung zur Zahlung von elektronischem Geld durch die Vorrichtung unter Verwendung des Autorisierungsschlüssels verschlüsselt wird.

3. Server (104) nach Anspruch 1, worin das eine oder die mehreren computerlesbaren Medien (204) ferner computerausführbare Anweisungen speichern, die, wenn sie ausgeführt werden, den einen oder die mehreren Prozessoren (202) veranlassen, Handlungen auszuführen, die Folgendes umfassen:
Übertragen einer Nachricht zu der Vorrichtung, um einen Saldo der Zuweisung von Geldmitteln zu aktualisieren; und
Übertragen einer Nachricht zum Zahlungsempfänger (112), die angibt, dass die Zahlung autorisiert ist, und einen Betrag der Zahlung bestätigt.

4. Server (104) nach Anspruch 1, worin das eine oder die mehreren computerlesbaren Medien (204) ferner computerausführbare Anweisungen speichern, die, wenn sie ausgeführt werden, den einen oder die mehreren Prozessoren (202) veranlassen, Handlungen auszuführen, die Folgendes umfassen:
Übertragen des elektronischen Geldes zu einer zweiten Vorrichtung; und
Anfordern einer Autorisierung für die Anforderung von einem anderen Benutzer als demjenigen, der die Zahlung veranlasst hat,
worin das Übertragen der Zahlung zum Zahlungsempfänger (112) von der Autorisierung durch einen anderen Benutzer als denjenigen, der die Zahlung veranlasst hat, abhängig ist.

5. Verfahren, das durch einen Server (104) durchgeführt wird, die Schritte umfassend:
Empfangen einer Anforderung von einer Vorrichtung (108), eine Zuweisung von Geldmitteln von einem Zahlungskonto an die Vorrichtung (108) als elektronisches Geld zu übertragen;
Erzeugen mindestens eines Autorisierungsschlüssels, der mit der Zuweisung assoziiert ist;
Übertragen des elektronischen Geldes zu der Vorrichtung mit Zahlungsinformation, die den mindestens einen mit der Zuweisung assoziierten Autorisierungsschlüssel einschließt, wobei die Zuweisung von Geldmitteln einen vorbestimmten Betrag aufweist, der kleiner als der Betrag der verfügbaren Geldmittel auf dem Zahlungskonto ist;
Empfangen einer Anforderung von einem Zahlungsempfänger (112) für eine Zahlung des von der Vorrichtung stammenden elektronischen Geldes; und
Übertragen einer Zahlung zum Zahlungsempfänger,
worin die Anforderung einer Zahlung von der Vorrichtung stammt und mindestens mit dem Autorisierungsschlüssel verschlüsselt ist, und die Zahlung nach Entschlüsselung der Anforderung und Überprüfung, dass ein Saldo der Zuweisung der Geldmittel nicht durch vorherige Zahlungen von der Vorrichtung erschöpft ist und die Zahlung einen Saldo der Zuweisung von Geldmitteln nicht übersteigt, übertragen wird.

6. Verfahren nach Anspruch 5, worin die Anforderung zur Zahlung von elektronischem Geld durch die Vorrichtung (108) unter Verwendung des Autorisierungsschlüssels verschlüsselt wird.

7. Verfahren nach Anspruch 5, ferner umfassend:
Übertragen einer Nachricht zu der Vorrichtung (108), um einen Saldo der Zuweisung der Geldmittel zu aktualisieren; und
Übertragen einer Nachricht zum Zahlungsempfänger (112), die angibt, dass die Zahlung autorisiert ist, und einen Betrag der Zahlung bestätigt.

8. Verfahren nach Anspruch 5, ferner umfassend:
Übertragen des elektronischen Geldes zu einer zweiten Vorrichtung; und
Anfordern einer Autorisierung für die Anforderung von einem anderen Benutzer als demjenigen, der die Zahlung veranlasst hat,
worin das Übertragen der Zahlung zum Zahlungsempfänger (112) von der Autorisierung durch den anderen Benutzer als denjenigen, der die Zahlung veranlasst hat, abhängig ist.

## Revendications

1. Serveur (104) comprenant :
un ou plusieurs processeurs (202) ; et
un ou plusieurs supports lisibles par ordinateur (204) stockant des instructions exécutables par ordinateur qui, lorsqu'elles sont exécutées, amènent ledit un ou lesdits plusieurs processeurs à mettre en œuvre les étapes ci-dessous consistant à :
en réponse à la réception d'une demande, en provenance d'un dispositif (108), visant à transmettre une allocation de fonds, d'un compte de paiement au dispositif (108), sous la forme de monnaie électronique, générer au moins une clé d'autorisation associée à l'allocation, et transmettre la monnaie électronique au dispositif avec des informations de paiement qui incluent ladite au moins une clé d'autorisation associée à l'allocation, l'allocation de fonds correspondant à un montant prédéterminé qui est inférieur au montant des fonds disponibles sur le compte de paiement ; et
en réponse à la réception d'une demande en provenance d'un bénéficiaire (112) pour un paiement de monnaie électronique provenant du dispositif, transmettre un paiement au bénéficiaire ;
dans lequel la demande de paiement provient du dispositif et est chiffrée par ladite au moins une clé d'autorisation, et le paiement est transmis après un déchiffrement de la demande et une vérification qu'un solde de l'allocation des fonds n'est pas épuisé par des paiements précédents à partir du dispositif, et que le paiement ne dépasse pas un solde de l'allocation de fonds.

2. Serveur (104) selon la revendication 1, dans lequel la demande de paiement de monnaie électronique est chiffrée par le dispositif en faisant appel à la clé d'autorisation.

3. Serveur (104) selon la revendication 1, dans lequel ledit un ou lesdits plusieurs supports lisibles par ordinateur (204) stockent en outre des instructions exécutables par ordinateur, qui, lorsqu'elles sont exécutées, amènent ledit un ou lesdits plusieurs processeurs (202) à mettre en œuvre les étapes ci-dessous consistant à :
transmettre un message au dispositif, visant à mettre à jour un solde de l'allocation des fonds ; et
transmettre un message au bénéficiaire (112), lequel indique que le paiement est autorisé et confirme un montant du paiement.

4. Serveur (104) selon la revendication 1, dans lequel ledit un ou lesdits plusieurs supports lisibles par ordinateur (204) stockent en outre des instructions exécutables par ordinateur, qui, lorsqu'elles sont exécutées, amènent ledit un ou lesdits plusieurs processeurs (202) à mettre en œuvre les étapes ci-dessous consistant à :
transmettre la monnaie électronique à un second dispositif ; et
demander une autorisation pour la demande d'un utilisateur différent d'un utilisateur ayant initié le paiement ;
dans lequel la transmission du paiement au bénéficiaire (112) est subordonnée à l'autorisation de l'utilisateur différent de l'utilisateur ayant initié le paiement.

5. Procédé mis en œuvre par un serveur (104) comprenant les étapes ci-dessous consistant à :
recevoir une demande, en provenance d'un dispositif (108), visant à transmettre une allocation de fonds, d'un compte de paiement au dispositif (108), sous la forme de monnaie électronique ;
générer au moins une clé d'autorisation associée à l'allocation ;
transmettre la monnaie électronique au dispositif avec des informations de paiement qui incluent ladite au moins une clé d'autorisation associée à l'allocation, l'allocation de fonds correspondant à un montant prédéterminé qui est inférieur au montant des fonds disponibles sur le compte de paiement ;
recevoir une demande en provenance d'un bénéficiaire (112) pour un paiement de monnaie électronique provenant du dispositif ;
transmettre un paiement au bénéficiaire ;
dans lequel la demande de paiement provient du dispositif et est chiffrée par au moins la clé d'autorisation, et le paiement est transmis après un déchiffrement de la demande et une vérification qu'un solde de l'allocation des fonds n'est pas épuisé par des paiements précédents à partir du dispositif, et que le paiement ne dépasse pas un solde de l'allocation de fonds.

6. Procédé selon la revendication 5, dans lequel la demande de paiement de monnaie électronique est chiffrée par le dispositif (108) en faisant appel à la clé d'autorisation.

7. Procédé selon la revendication 5, comprenant en outre les étapes ci-dessous consistant à :
transmettre un message au dispositif (108), visant à mettre à jour un solde de l'allocation des fonds ; et
transmettre un message au bénéficiaire (112), lequel indique que le paiement est autorisé et confirme un montant du paiement.

8. Procédé selon la revendication 5, comprenant en outre les étapes ci-dessous consistant à :
transmettre la monnaie électronique à un second dispositif ; et
demander une autorisation pour la demande d'un utilisateur différent d'un utilisateur ayant initié le paiement ;
dans lequel la transmission du paiement au bénéficiaire (112) est subordonnée à l'autorisation de l'utilisateur différent de l'utilisateur ayant initié le paiement.
